# EUROPÄISCHE PATENTSCHRIFT

(11) **EP 0 380 919 B1**
(45) Veröffentlichungstag und Bekanntmachung des Hinweises auf die Patenterteilung: **14.04.1993**
(21) Anmeldenummer: 90100261.8
(22) Anmeldetag: 08.01.1990
(51) Int. Cl.: B23B 5/32

(54) **Unterflur-Radsatzdrehmaschine zum Reprofilieren der Räder von Eisenbahn-Radsätzen**
Underfloor wheelset lathe for reprofiling the wheels of railway wheel sets
Tour à roues, en fosse, pour le reprofilage des roues d'essieux ferroriaires

(30) Priorität: 28.01.1989 DE 3902550
(43) Veröffentlichungstag der Anmeldung: 08.08.1990
(73) Patentinhaber: Hoesch Maschinenfabrik Deutschland Aktiengesellschaft, 44145 Dortmund (DE)
(72) Erfinder: Brinkmann, Dirk, Dipl.-Ing., D-4670 Lünen (DE); Leitloff, Uwe, Dipl.-Ing., D-4320 Hattingen (DE)

(56) Entgegenhaltungen:
- EP-A- 0 185 850
- EP-A- 0 338 217
- DE-U- 8 630 821
- GB-A- 2 058 639

## Beschreibung

Die Erfindung bezieht sich auf eine Unterflur-Radsatzdrehmaschine zum Reprofilieren der Räder von ein- und ausgebauten Eisenbahn-Radsätzen , mit vier angetriebenen Reibrollen, zwei Drehsupporten, zwei Achslagerstützvorrichtungen und zwei Niederhaltevorrichtungen, wobei jede Niederhaltevorrichtung eine um eine senkrechte Schwenkachse schwenkbare sowie vertikal verstellbare Traverse mit einer in ihr geführten Pinole aufweist. Derartige Unterflur-Radsatzdrehmaschinen sind aus den EP-A-0185850 und GB-A-2058639 bekannt.

Bei den bekannten Unterflur-Radsatzdrehmaschinen der vorgenannten Art üben große Schnittkraftschwankungen, die während der Reprofilierung der mit abgebremsten Flachstellen versehenen Räder entstehen, starken Einfluß auf die Bearbeitungsgenauigkeit aus, da eine ortsfeste Fixierung der Radsatzachse in axialer und radialer Richtung nicht gewährleistet ist.

Hiervon ausgehend liegt der Erfindung die Aufgabe zugrunde, eine Unterflur-Radsatzdrehmaschine der eingangs genannten Art so auszubilden, daß die Radsatzachse eines ein- oder ausgebauten Radsatzes in axialer und radialer Richtung ortsfest fixiert werden kann und dadurch der Einfluß der Schnittkraftschwankungen auf die Bearbeitungsgenauigkeit verringert wird.

Erfindungsgemäß wird diese Aufgabe durch die im Patentanspruch 1 angegebenen Merkmale gelöst.

Eine zweckmäßige Ausgestaltung der Erfindung ergibt sich aus dem abhängigen Patentanspruch 2.

Im folgenden wird die Erfindung anhand einer Zeichnung, in der ein Ausführungsbeispiel schematisch dargestellt ist, näher beschrieben.

Es zeigt
- Fig. 1: eine Unterflur-Radsatzdrehmaschine mit zwei Überbrückungsschienen und zwei mitlaufenden Körnerspitzen im Grundriß,
- Fig. 2: die Unterflur-Radsatzdrehmaschine mit zwei mitlaufenden Körnerspitzen und einem an der Radsatzwelle zentrierten Radsatz im Längsschnitt mit einem Teilschnitt durch ein Fundament,
- Fig. 3: die Unterflur-Radsatzdrehmaschine mit zwei Niederhaltern und einem an den Achslagerkästen zentrierten Radsatz im Längsschnitt mit einer Teilansicht eines auf den Achslagerkästen aufliegenden Fahrzeuggestells und mit einem Teilschnitt durch das Fundament,

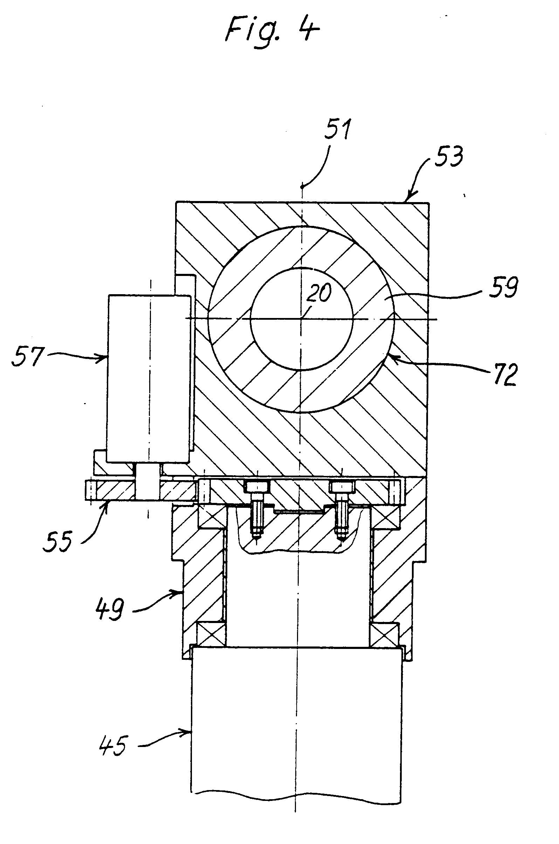

- Fig. 4: den Teilschnitt entsprechend der Linie IV-IV in Fig. 2 und 3 in vergrößertem Maßstab.

Eine Unterflur-Radsatzdrehmaschine 1, die mit einem Fundament 2 fest verbunden ist, hat zwei symmetrisch zur Gleismitte 3 angeordnete Maschineneinheiten 4, 5.

Jede Maschineneinheit 4, 5 weist zwei Reibrollen 6, 7, 8, 9, zwei Reibrollenantriebe 10, 11, 12, 13, einen Drehsupport 14, 15, eine Achslagerstützvorrichtung 16, 17 und eine Niederhaltevorrichtung 18, 19 auf.

Die Reibrollen 6 bis 9 sind einzeln um je eine parallel zur Drehachse 20 angeordnete Schwenkachse 21, 22, 23, 24 schwenkbar. Zur Erzeugung der Schwenkbewegung einer jeden Reibrolle 6 bis 9 ist ein Pneumatikzylinder 25, 26, 27, 28 vorgesehen.

Jeder Drehsupport 14, 15 ist ausgeführt mit einem Längsschlitten 29, 30, einem Planschlitten 31, 32, einem Längsvorschubantrieb 33, 34, einem Planvorschubantrieb 35, 36 und einem Drehwerkzeug 37, 38.

Die Achslagerstützvorrichtungen 16, 17 besitzen je eine höhenverstellbare Pratze 39, 40, eine Kolbenzylindereinheit 41, 42 und eine Blockiervorrichtung 43, 44.

Jede Niederhaltevorrichtung 18, 19 enthält eine senkrecht angeordnete Kolbenzylindereinheit 45, 46, eine Blockiervorrichtung 47, 48, eine Schwenklagerung 49, 50 mit senkrechter Schwenkachse 51, 52 und eine Traverse 53, 54.

Die Schwenkbewegung einer jeden Traverse 53, 54 erzeugt ein mit einem Zahnradtrieb 55, 56 verbundener Motor 57, 58.

Jede Traverse 53, 54 dient der waagerechten Führung einer Pinole 59, 60, die mit einer mitlaufenden Körnerspitze 61, 62 oder einem Niederhalter 63, 64 bestückt ist.

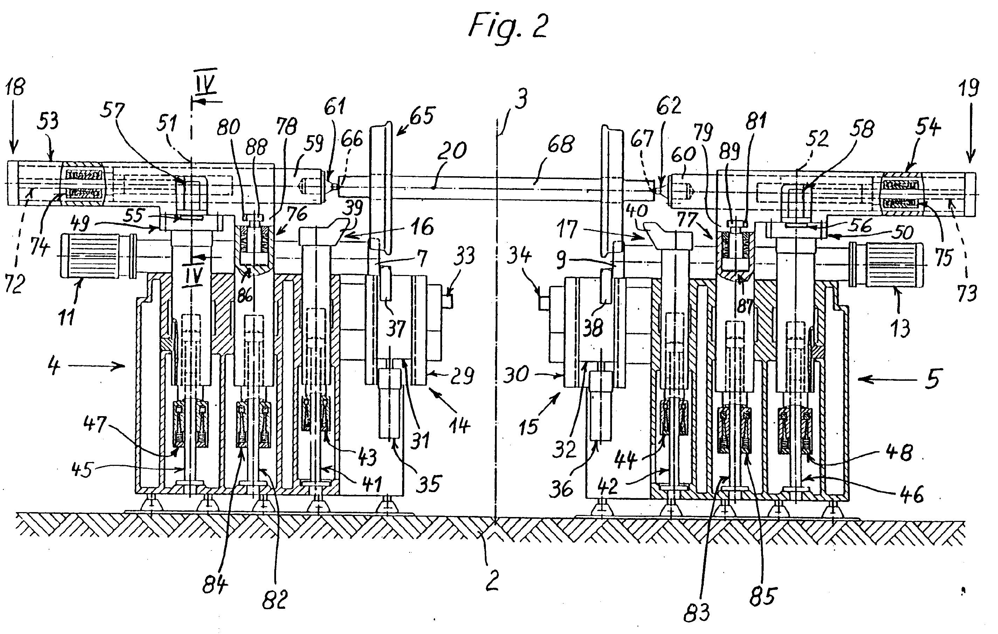

Die mitlaufenden Körnerspitzen 61, 62 werden zur Zentrierung eines Radsatzes 65 an den Zentrierbohrungen 66, 67 der Radsatzwelle 68 benutzt (Fig. 2).

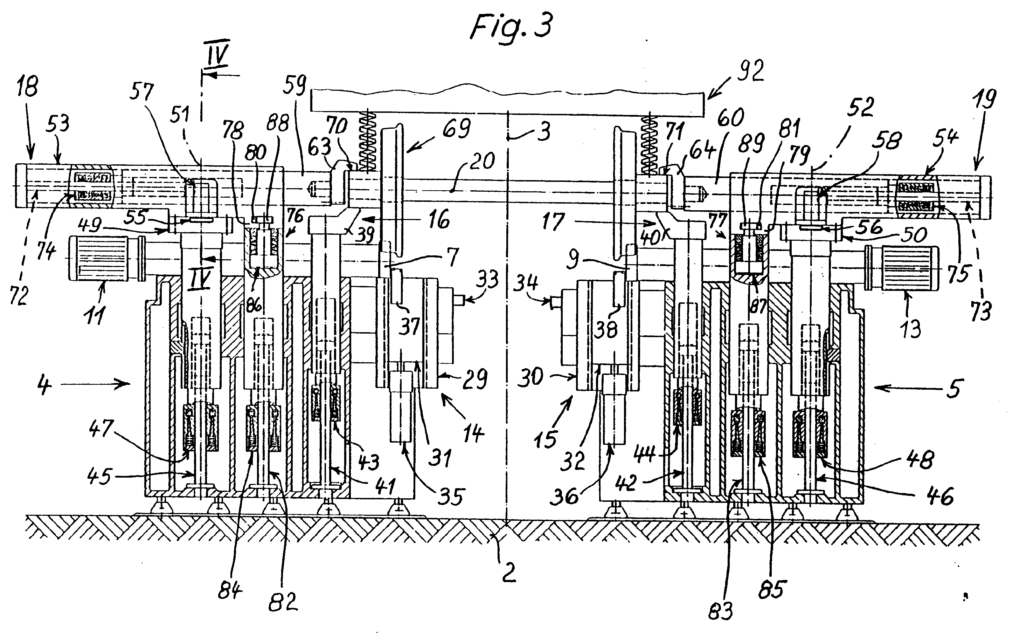

Die Niederhalter 63, 64 und die Pratzen 39, 40 werden zur Zentrierung eines Radsatzes 69 an den Achslagerkästen 70, 71 eingesetzt (Fig. 3).

Jede Pinole 59, 60 ist Bestandteil einer Kolbenzylindereinheit 72, 73, zu der eine Blockiervorrichtung 74, 75 gehört.

Jede Traverse 53, 54 ist mit einem auf eine Heb- und Absenkvorrichtung 76, 77 spannbaren Ansatz 78, 79 ausgeführt, in dem sich eine T-Nut 80, 81 befindet.

Die Heb- und Absenkvorrichtungen 76, 77 weisen je eine senkrecht angeordnete Kolbenzylindereinheit 82, 83, eine Blockiervorrichtung 84, 85, einen Federspannzylinder 86, 87 und einen T-förmigen Spannkopf 88, 89 auf.

Jede Heb- und Absenkvorrichtung 76, 77 ist zwischen einer Achslagerstützvorrichtung 16, 17 und einer Niederhaltevorrichtung 18, 19 angeordnet.

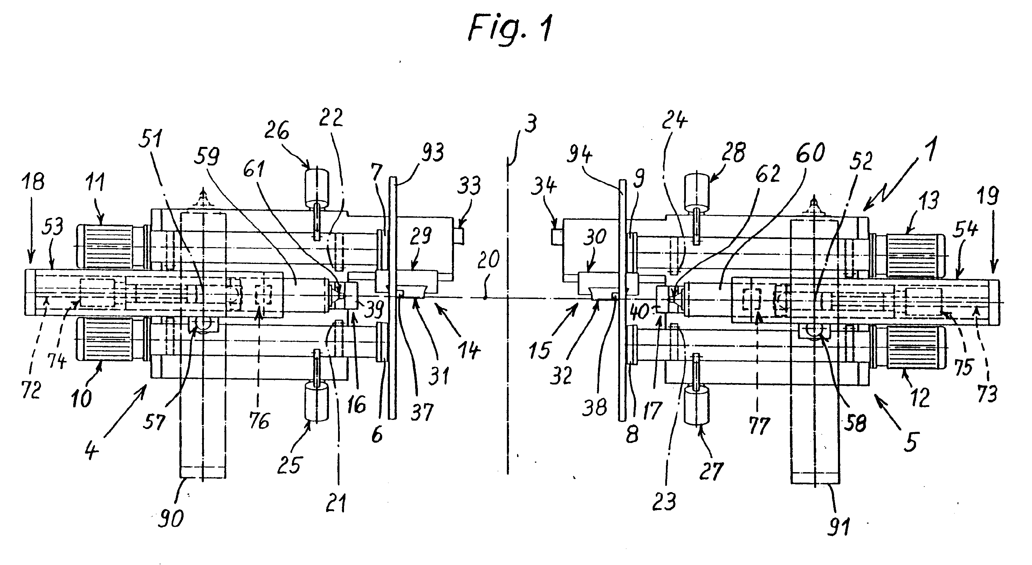

In Fig. 1 ist dargestellt, daß jede Traverse 53, 54 in eine strichpunktierte Position 90, 91 parallel zur Gleismitte 3 geschwenkt werden kann. In diesen Positionen 90, 91 der Traversen 53, 54 wird beim Ein- und Ausrollen des Radsatzes 65 bzw. Ein- und Ausfahren eines Schienenfahrzeuges 92 eine Kollision mit den Körnerspitzen 61, 62 und Niederhaltern 63, 64 vermieden.

Zur Unterflur-Radsatzdrehmaschine 1 gehören zwei Überbrückungsschienen 93, 94 (Fig. 1), die bei Zentrierung der Radsätze 65, 69 aus dem Maschinenbereich entfernt sind (Fig. 2 und 3).

## Patentansprüche

1. Unterflur-Radsatzdrehmaschine zum Reprofilieren der Räder von ein- (69) und ausgebauten Eisenbahn-Radsätzen (65), mit vier angetriebenen Reibrollen (6, 7, 8, 9), zwei Drehsupporten (14, 15), zwei Achslagerstützvorrichtungen (16, 17) und zwei Niederhaltevorrichtungen (18, 19), wobei jede Niederhaltevorrichtung (18, 19) eine um eine senkrechte Schwenkachse (51, 52) schwenkbare sowie vertikal verstellbare Traverse (53, 54) mit einer in ihr geführten Pinole (59, 60) aufweist, dadurch gekennzeichnet, daß die Achslagerstützvorrichtungen (16, 17) und die Traversen (53, 54) bezüglich ihrer Höhenlage gegenüber dem Maschinengestellniveau sowie die Pinolen (59, 60) bezüglich ihrer axialen Lage gegenüber den Traversen (53, 54) mittels Blockiervorrichtungen (43, 44, 47, 48, 74, 75) arretierbar sind und daß an dem dem Radsatz (69, 65) zugewandten Ende jeder Traverse (53, 54) eine bezüglich ihrer Höhenlage gegenüber dem Maschinengestellniveau mittels einer weiteren Blockiervorrichtung (84, 85) arretierbare Heb- und Absenkvorrichtung (76, 77) angreift.

2. Unterflur-Radsatzdrehmaschine nach Anspruch 1, dadurch gekennzeichnet, daß jede Heb- und Absenkvorrichtung (76, 77) einen T-förmigen Spannkopf (88, 89) aufweist, der in eine in jeder Traverse (53, 54) vorhandene T-Nut (80, 81) eingreift.

## Claims

1. Underfloor wheelset lathes intended for reprofiling wheels of an installed railway wheelset (69) and a removed railway wheelset (65), the said wheelset lathes having four drivable friction rollers (6, 7, 8, 9), two lathe slide rests (14, 15), two axle bearing support devices (16, 17) and two holding down devices (18, 19) wherein each holding down device (18, 19) has a cross bar (53, 54) which is vertically displaceable and pivotable about a perpendicular pivot axis (51, 52), with a sleeve (59, 60) guided in the said cross bar, characterised in that by means of the blocking devices (43, 44, 47, 48, 74, 75) the axle bearing support devices (16, 17) and the cross bars (53, 54) can be retained with respect to their height in relation to the level of the machine frame and also the sleeves (59, 60) can be retained with respect to their axial position in relation to the cross bars (53, 54) and furthermore that a raising and lowering device (76, 77), which can be retained with respect to its height in relation to the level of the vehicle chassis by means of a further blocking device (84, 85) engages the end of each cross bar (53, 54) facing the wheelset (69, 65).

2. Underfloor wheelset lathe according to claim 1, characterised in that each raising and lowering device (76, 77) has a T-shaped tensioning head (88, 89), which engages in a T-slot (80, 81) provided in each cross bar (53, 54).

## Revendications

1. Tour à roues en fosse, pour le reprofilage des roues d'essieux ferroriaires montés (69) ou démontés (65), comprenant quatre rouleaux de friction entraînés (6, 7, 8, 9), deux supports rotatifs (14, 15), deux dispositifs de soutien de boîtes d'essieux (16, 17) et deux dispositifs serre-flan (18, 19), dans lequel chaque dispositif serre-flan (18, 19) présente une traverse (53, 54) qui peut pivoter autour d'un axe perpendiculaire (51, 52), et qui peut être ajustée verticalement, avec une douille (59, 60) qui y est guidée, caractérisé en ce que la position en hauteur des dispositifs de soutien de boîtes d'essieux (16, 17) et des traverses (53, 54) par rapport au niveau du bâti de la machine, et la position axiale des douilles (59, 60) par rapport aux traverses (53, 54) peuvent être bloquées au moyen de dispositifs de blocage (43, 44, 47, 48, 74, 75), et en ce que un dispositif de levage et d'abaissement (76, 77) pouvant être fixé en hauteur par rapport au niveau du bâti de la machine au moyen d'un autre dispositif de blocage (84, 85), coopère avec l'extrémité de chaque traverse (53, 54) tournée vers l'essieu (69, 65).

2. Tour à roues en fosse selon la revendication 1, caractérisé en ce que chaque dispositif de levage et d'abaissement (76, 77) présente une tête en forme de T (88, 89), qui coopère avec une rainure en T (80, 81) prévue dans chaque traverse (53, 54).
